# EUROPÄISCHE PATENTSCHRIFT

(11) **EP 0 735 552 B1**
(45) Veröffentlichungstag und Bekanntmachung des Hinweises auf die Patenterteilung: **18.11.1998**
(21) Anmeldenummer: 96104221.5
(22) Anmeldetag: 16.03.1996
(51) Int. Cl.: H01F 38/42, H02M 7/10

(54) **Hochspannungstransformator für einen Fernsehempfänger**
High voltage transformer for a television receiver
Transformateur à haute tension pour un récepteur de télévision

(30) Priorität: 27.03.1995 DE 19510678
(43) Veröffentlichungstag der Anmeldung: 02.10.1996
(73) Patentinhaber: DEUTSCHE THOMSON-BRANDT GMBH, 78048 Villingen-Schwenningen (DE)
(72) Erfinder: Goseberg, Walter, 30457 Hannover (DE)

(56) Entgegenhaltungen:
- EP-A- 0 033 450
- EP-A- 0 082 966
- WO-A-92/10906
- DE-A- 2 504 355
- DE-A- 3 602 005
- US-A- 4 454 572

## Beschreibung

Die Erfindung geht aus von einem Hochspannungstransformator gemäß dem Oberbegriff des Anspruchs 1.

Ein derartiger Hochspannungstransformator ist aus der EP-A-0 082 966 bekannt.

Bei einem derartigen Hochspannungstransformator wird der Ladekondensator für die Hochspannung nur während der relativ schmalen Spitze des Rücklaufimpulses an der Hochspannungswicklung nachgeladen. Durch diese schmale Impulsspitze ergibt sich ein relativ großer Innenwiderstand für die Hochspannungsquelle. Zur Verringerung des Innenwiderstandes ist es bekannt, die Streuinduktivität der Hochspannungswicklung zusammen mit den wirksamen Kapazitäten auf bestimmte Harmonische der Frequenz der Sinushalbwelle während der Rücklaufzeit abzustimmen, insbesondere auf eine ungeradzahlige Harmonische wie z.B. die 5., die 9., die 13. Harmonische. Durch diese Abstimmung werden eine Verbreiterung der Impulsspitze des Rücklaufimpulses, eine längere Ladezeit für den Ladekondensator und dadurch ein geringerer Innenwiderstand der Hochspannungsquelle erreicht.

Bei dieser Abstimmung auf eine bestimmte Harmonische der Rücklaufschwingung ergibt sich jedoch schon eine nennenswerte Verschlechterung des Innenwiderstandes durch Abweichungen von der richtigen Abstimmung (5., 9., 13., 17., usw). Derartige Abweichungen sind bedingt durch unvermeidbare Toleranzen in der Wicklung, in dem Drahtdurchmesser, in dem Wert des Rücklaufkondensators sowie der Rücklaufzeit.

Bei extremen Übergängen zwischen zwei verschiedenen Zuständen, z.B. bei einem Kanalwechsel, wird das genannte, auf eine Frequenz abgestimmte System plötzlich zum Schwingen angestoßen. Das Bild wird in derartigen Fällen für einige ms für den Betrachter nicht erkennbar derart hell gesteuert, daß ein Strahlstrom in der Größenordnung von 3 bis 5 mA fließt. Die im allgemeinen vorgesehene Regelung und Begrenzung des Strahlstromes setzt dabei nicht ein, weil diese Regelschaltung eine Zeitkonstante von etwa 10 bis 15 ms haben muß, damit echte weiße Flächen im Bild nicht verfälscht werden. Bei einem derart hohen Strahlstrom erzeugt das Abschalten der Hochspannungs-Gleichrichter in der Hochspannungswicklung im allgemeinen das höchste Überschwingen. Die Rücklaufimpulsspitze an der Primärwicklung am Schalttransistor kann dabei um mehr als 150 V ansteigen. Durch die Addition dieser Spannungserhöhung zu dem ohnehin schon hohen Rücklaufimpuls (größer als 1000 Vpp) am Schalttransistor kann dieser Transistor gefährdet werden. Es ist daher bekannt, zur Unterdrückung derartiger störender Überschwinger in Reihe zur Primärwicklung des Transformators einen sogenannten RLC-Schwingkreis einzuschalten. Dieser besteht aus einer im Stromweg liegenden Spule, der die Reihenschaltung eines Kondensators und eines Widerstandes parallel geschaltet ist.

Aus der US 4,454,572 ist ein Hochspannungstransformator für einen Fernsehempfänger bekannt mit einer Hochspannungswicklung, die durch mehrere Dioden in getrennte Teilwicklungen unterteilt ist, wobei die Zahl der Teilwicklungen größer ist als die Zahl der Dioden und die Teilwicklungen auf bestimmte Harmonische der Frequenz der Rücklaufschwingung abgestimmt sind. Insbesondere ist ein Hochspannungstransformator mit zwei Dioden und drei Teilwicklungen offenbart, die auf die fünfte und auf die siebte Harmonische abgestimmt sind.

In der EP-A-0 082 966 ist ein Hochspannungstransformator für Fernsehgeräte offenbart, dessen Hochspannungswicklung durch zwei Dioden in drei Teilwicklungen unterteilt ist, wobei die Teilwicklungen in Kammern eines Kammernspulenkörpers angeordnet sind und die Teilwicklungen insbesondere auf die fünfte und die neunte Harmonische abgestimmt sind. Aus der EP-A-0 033 450 ist ein Hochspannungstransformator für einen Fernsehempfänger bekannt, dessen Hochspannungswicklung in Kammern eines Kammernspulenkörpers liegt und durch eine oder zwei in Serie geschaltete Dioden in zwei Teilwicklungen unterteilt ist. Durch unterschiedliche Füllungen der Kammern werden die Teilwicklungen auf Harmonische der Frequenz der Rücklaufschwingungen abgestimmt.

Der Erfindung liegt die Aufgabe zugrunde, den Transformator so auszubilden, daß die Amplitude der Überschwinger in der Hochspannungswicklung nennenswert verringert wird.

Diese Aufgabe wird durch die im Anspruch 1 angegebene Erfindung gelöst. Gemäß der Erfindung ist die Zahl der Teilwicklungen der Hochspannungswicklung größer als die Zahl der Dioden, und getrennte Teilwicklungen sind auf verschiedene Harmonische abgestimmt. Der Abstand zwischen der ersten und der zweiten sowie zwischen der vorletzten und letzten, mit einer Wicklung belegten Kammer des Spulenkörpers ist jeweils deutlich kleiner als der Abstand zwischen den übrigen Kammern.

Durch die Abstimmung von Teilwicklungen auf verschiedene Harmonische wird die Bandbreite des Schwingsystems im Sinne eine Bandfiltercharakteristik erhöht, damit auch die Dämpfung erhöht und die Güte verringert. Bei einer derart erhöhten Bandbreite wird die erforderliche Genauigkeit in der Abstimmung beträchtlich verringert.

Durch diese Lösung ergeben sich mehrere Vorteile. Die Abstimmung auf unterschiedliche Harmonische ändert die Form des Rücklaufimpulses an der Hochspannungswicklung derart, daß auch der Impuls an der Primärwicklung und somit am Schalttransistor weitestgehend von störenden und gefährlichen Spannungserhöhungen frei bleibt. Dadurch wird die Gefährdung des Schalttransistors durch derartige Spannungserhöhungen beträchtlich herabgesetzt. Durch die erzielte Form des Rücklaufimpulses an der Hochspannungswicklung wird außerdem eine Verringerung des Innenwiderstandes der Hochspannungsquelle erreicht. Außerdem wird der Innenwiderstand weitestgehend unabhängig von Toleranzen. Der obengenannte, bisher im Primärweg vorgesehene und zur Unterdrückung von Spannungserhöhungen dienende LRC-Kreis wird nicht mehr benötigt. Auch werden störende Einflüsse des Hochspannungstransformators durch Streuung auf benachbarte Baugruppen wie z.B. den Videoverstärker beträchtlich herabgesetzt.

Vorzugsweise sind vier Teilwicklungen auf vier verschiedene Harmonische abgestimmt, insbesondere auf die 7., die 8,5., die 9,5. und 11. Harmonische der Frequenz der Rücklaufschwingung. Diese Abstimmung ergibt einen Rücklaufimpuls mit einem besonders günstigen Verlauf.

Die Teilwicklungen der Hochspannungswicklung liegen vorzugsweise in Kammern eines Kammerspulenkörpers. Die Abstimmung auf die jeweils gewünschte Harmonische kann dabei durch den Abstand des Kammergrundes vom Kern, durch den Abstand der Kammern voneinander und/oder durch das Maß der Füllung der Kammern mit der Teilwicklung erreicht werden. Ein derartiger Kammerspulenkörper bietet bei seiner Bemessung mehrere Möglichkeiten, die jeweils gewünschte Abstimmung zu erreichen. Dabei kann der Abstand zwischen der ersten und zweiten sowie zwischen der vorletzten und letzten Kammer des Kammerspulenkörpers deutlich kleiner sein als der Abstand zwischen den übrigen Kammern. Durch diesen verringerten Abstand wird die Wicklungskapazität zwischen den Wicklungen verringert und somit die Abstimmung auf eine besonders niedrige Harmonische erleichtert. Zum Beispiel beträgt der deutlich kleinere Abstand zwischen den Kammern an den Enden des Spulenkörpers etwa 30 - 50 % des Abstandes der übrigen Kammern.

Vorzugsweise liegt zwischen der ersten Teilwicklung und dem Bezugspotential, insbesondere Erde, sowie zwischen der letzten Teilwicklung und der Hochspannungsklemme, also insbesondere der Anode der Bildröhre, keine Diode. Die erste Teilwicklung und die letzte Teilwicklung haben dann im allgemeinen eine wesentlich geringere Kopplung als die Teilwicklungen im Mittenbereich des Kammerspulenkörpers, wodurch die Abstimmung auf die jeweils gewünschte Harmonische erleichtert wird.

Die Erfindung wird im folgenden anhand der Zeichnung erläutert. Darin zeigen
- Fig. 1: ein Ersatzschaltbild für den Hochspannungstransformator mit den angeschlossenen Bauteilen zur Erzeugung der Hochspannung,
- Fig. 2: den Rücklauf impuls an der Hochspannungswicklung bei einem bekannten Transformator,
- Fig. 3: den Rücklaufimpuls einer Hochspannungswicklung für einen erfindungsgemäß bemessenen Transformator,
- Fig. 4: einen Kammerspulenkörper für die einzelnen Teilwicklungen,
- Fig. 5: eine besondere Ausführung des Kammerspulenkörpers und
- Fig. 6: die Impulsform an der Primärwicklung bzw. am Schalttransistor.

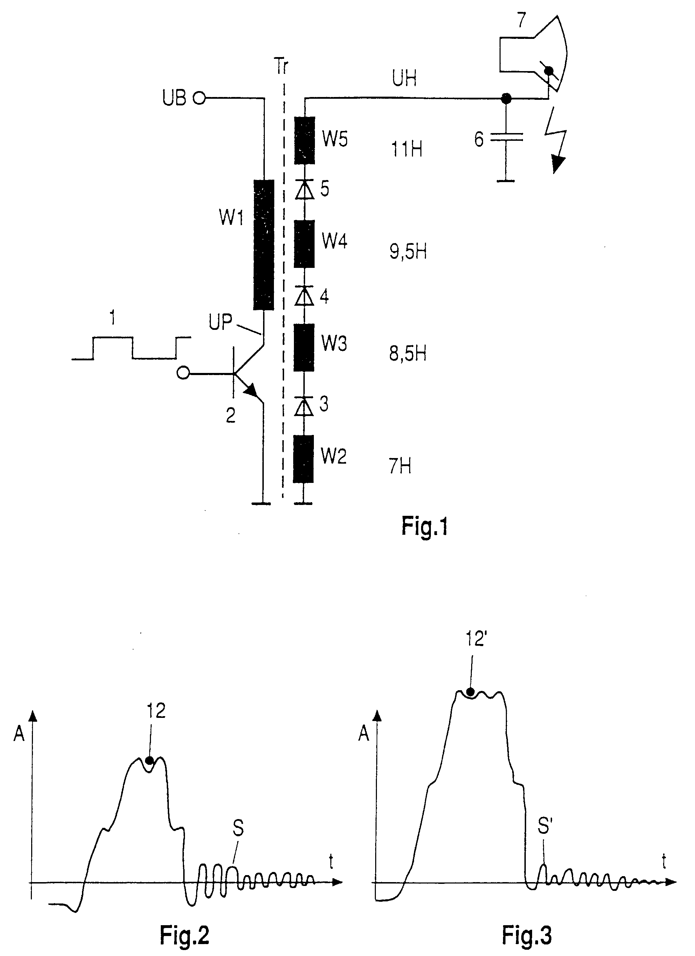

Fig. 1 zeigt den von der zeilenfrequenten Schaltspannung 1 gesteuerten Schaltransistor 2 sowie den Hochspannungstransformator Tr mit der an die Betriebsspannung UB angeschlossenen Primärwicklung W1 und den die Hochspannungswicklung bildenden Teilwicklungen W2, W3, W4, W5. Die Hochspannungswicklung ist nach dem Diodensplitprinzip aufgebaut, indem zwischen den Teilwicklungen W2, W3, W4, W5 Hochspannungsgleichrichterdioden 3, 4, 5 liegen. Die Sekundärseite beginnt somit jeweils mit einer Wicklung und endet mit einer Wicklung. Das bedeutet, daß jeweils zwischen der Wicklung W2 und Erde und der Wicklung W5 und dem Hochspannungsanschluß keine Diode mehr liegt. Die Anzahl der Teilwicklungen W2 - W5 ist mit vier somit größer als die Zahl der dazwischen liegenden drei Dioden 3, 4, 5. Die Hochspannungswicklung liefert die Hochspannung UH an dem im wesentlichen durch den Anodenbelag der Bildröhre 7 gebildeten Ladekondensator 6.

Die Teilwicklung W2 ist etwa auf die 7. Harmonische, die Teilwicklung W3 auf die 8,5. Harmonische, die Teilwicklung W4 auf die 9,5. Harmonische und die Teilwicklung W5 auf die 11. Harmonische abgestimmt. Die Wicklungen W3 und W4 ergeben dadurch zusammen eine Abstimmung auf die 9. Harmonische.

Bei einer derartigen Schaltung wurde bislang in Reihe zu der Primärwicklung W1 eine sogenannter RLC-Kreis benötigt. Das ist eine im Stromweg liegende Spule, der die Reihenschaltung eines Kondensators und eines Widerstandes parallel geschaltet ist. Dieser Kreis dient zu Verringerung des Innenwiderstandes und zur Bedämpfung von störenden Spannungsspitzen am Kollektor des Transistors 2. Durch die beschriebene Abstimmung wird indessen dieser Kreis nicht mehr benötigt.

Anhand der Fig. 2 und 3 wird die vorteilhafte Wirkung auf die Impulsform des Rücklaufimpulses an der Sekundärwicklung erläutert.

Fig. 2 zeigt den Rücklaufimpuls an den Wicklungen W2 - W5. Es ist ersichtlich, daß der Impuls eine relativ geringe Amplitude und Breite sowie eine unerwünschte Einsattelung 12 an der Impulsspitze aufweist. Die Einsattelung 12 kann zu einer Unterbrechung des Ladestromes für den Ladekondensator führen und dadurch den Innenwiderstand vergrößern. Ein weiterer Nachteil besteht darin, daß durch die Abstimmung auf eine Harmonische am Ende des eigentlichen Impulses ein Überschwingen S mit der Frequenz der genannten Harmonischen auftritt. Dieses Überschwingen verursacht auf der Primärseite eine Spannungserhöhung des Impulses am Transistor 2, die den Transistor 2 gefährden kann.

Fig. 3 zeigt den Rücklaufimpuls an der Hochspannungswicklung bei der beschriebenen Abstimmung. Der Impuls gemäß Fig. 3 hat gegenüber dem Impuls gem. Fig. 2 mehrere Vorteile. Zunächst ist die Amplitude des Rücklaufimpulses, die für die Größe der erzielbaren Hochspannung maßgebend ist, größer. Auch ist die unerwünschte Einsattelung 12' an der Impulsspitze wesentlich geringer, was für den Innenwiderstand vorteilhaft ist. Außerdem ist die Impulsspitze breiter, so daß die Ladezeit für den Ladekondensator erhöht und somit der Innenwiderstand verringert wird. Ein weiterer Vorteil besteht darin, daß am Ende des Impulses kein derartig hohes Überschwingens gemäß Fig. 2 auf einer singulären Frequenz stattfindet, sondern durch Interferenzen zwischen den verschiedenen, bei der Abstimmung wirksamen Frequenzen nur noch ein Überschwingen mit reduzierter Amplitude und verringerter Dauer auftritt.

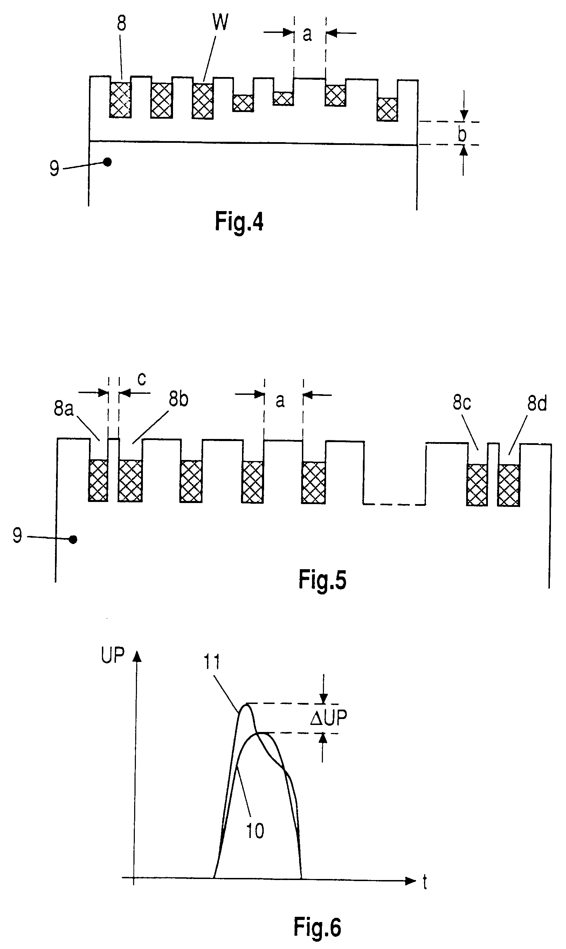

Fig. 4 zeigt im Prinzip einen Kammerspulenkörper 9. Die Teilwicklungen W der Hochspannungswicklung liegen in Kammern 8 des Kammerspulenkörpers 9. Die jeweils gewünschte Abstimmung auf eine bestimmte Harmonische kann durch verschiedene Konstruktionsparameter des Kammerspulenkörpers 9 erreicht werden. Das sind insbesondere die gezeigte unterschiedliche Füllung der Kammern 8 mit einer Teilwicklung W, der unterschiedliche Abstand a der Kammern voneinander durch unterschiedliche Stärke der Kammerwände und eine unterschiedliche Stärke b des Nutengrundes, also des Abstandes der jeweiligen Teilwicklung W von dem den Spulenkörper 9 tragenden Kern. Zum Beispiel wird durch Erhöhung des Abstandes b die Kopplung zur Erzielung einer bestimmten Abstimmung verringert.

Fig. 5 zeigt eine weitere Ausführung des Kammerspulenkörpers 9. Der Abstand c zwischen der ersten Kammer 8a und der zweiten Kammer 8b sowie der Abstand zwischen der vorletzten Kammer 8c und der letzten Kammer 8d sind wesentlich geringer als der Abstand a zwischen den Kammern im Mittenbereich des Kammerspulenkörpers 9. Durch eine derartige Konstruktion kann die jeweils gewünschte Abstimmung auf eine gewünschte Harmonische erreicht werden. Insbesondere ermöglicht die größere Koppelkapazität zwischen den Kammern 8a und 8b sowie 8c und 8d durch den verringerten Abstand c eine Abstimmung auf besonders niedrige Harmonische. Der Abstand c beträgt etwa 30 % - 50 % des Abstandes a.

Fig. 6 zeigt den Rücklaufimpuls UP an der Primärwicklung W1, d.h. am Kollektor des Transistors 2. Die Kurve 10 gilt für Strahlstrom = 0 und die Kurve 11 für Strahlstrom = 1,5 mA. Ohne die beschriebene Abstimmung kann die dargestellte Spannungserhöhung Δ UP von 150 V auftreten, die eine Gefährdung des Transistors 2 bewirken kann. Diese Spannungserhöhung wurde bisher mit dem genannten RLC-Kreis unterdrückt. Durch die beschriebene Abstimmung mit der Impulsform gemäß Fig. 3 wird diese Spannungserhöhung Δ UP beträchtlich verringert, so daß der genannte RLC-Kreis entfallen kann.

## Patentansprüche

1. Hochspannungstransformator für einen Fernsehempfänger mit einer Hochspannungswicklung (W) mit mehreren durch Dioden (3 - 5) getrennten Teilwicklungen (W2 - W5), die auf eine bestimmte Harmonische der Frequenz der Rücklaufschwingung abgestimmt sind, wobei die Zahl der Teilwicklungen (W2 - W5) größer ist als die Zahl der Dioden (3 - 5), getrennte Teilwicklungen (W2 - W5) auf verschiedene Harmonische abgestimmt sind, und die Teilwicklungen (W2 - W5) in Kammern (8) eines Kammerspulenkörpers (9) liegen, **dadurch gekennzeichnet**, daß jeweils der Abstand (c) zwischen der ersten (8a) und der zweiten (8b) sowie zwischen der vorletzten (8c) und der letzten, mit einer Wicklung belegten Kammer (8d) des Spulenkörpers (9) deutlich kleiner ist als der Abstand (a) zwischen den übrigen Kammern.

2. Transformator nach Anspruch 1, **dadurch gekennzeichnet**, daß der deutlich kleinere Abstand (c) 30 - 50 % des Abstandes (a) der übrigen Kammern beträgt.

3. Transformator nach Anspruch 1, **dadurch gekennzeichnet**, daß vier Teilwicklungen (W2 - W5) auf vier verschiedene Harmonische abgestimmt sind.

4. Transformator nach Anspruch 3, **dadurch gekennzeichnet, daß** die Teilwicklungen (W2 - W5) auf die 7., die 8,5., die 9,5. und die 11. Harmonische abgestimmt sind.

5. Transformator nach Anspruch 3, **dadurch gekennzeichnet, daß** jeweils zwischen der ersten Teilwicklung (W2) und dem Bezugspotential sowie zwischen der letzten Teilwicklung (W5) und der Hochspannungsklemme keine Diode liegt.

6. Transformator nach Anspruch 5, **dadurch gekennzeichnet**, daß die Abstimmung auf die jeweils gewünschte Harmonische durch den Abstand (b) des Kammergrunds vom Kern, durch den Abstand (a) der Kammern (8) voneinander und/oder durch das Maß der Füllung der Kammern (8) mit der Teilwicklung (W) erreicht ist.

## Claims

1. High-voltage transformer for a television receiver having a high-voltage winding (W) with a plurality of partial windings (W2 - W5) which are separated by diodes (3 - 5) and are tuned to a specific harmonic of the frequency of the flyback oscillation, the number of partial windings (W2 - W5) being greater than the number of diodes (3 - 5), separated partial windings (W2 - W5) being tuned to different harmonics and the partial windings (W2 - W5) being situated in chambers (8) of a chamber-type coil former (9), characterized in that the distance (c) between the first (8a) and the second (8b) and between the next to last (8c) and the last chamber (8d) of the coil former (9), which chamber is occupied by a winding, is in each case significantly smaller than the distance (a) between the rest of the chambers.

2. Transformer according to Claim 1, characterized in that the significantly smaller distance (c) is 30 - 50% of the distance (a) between the rest of the chambers.

3. Transformer according to Claim 1, characterized in that four partial windings (W2 - W5) are tuned to four different harmonics.

4. Transformer according to Claim 3, characterized in that the partial windings (W2 - W5) are tuned to the 7th, the 8.5th, the 9.5th and the 11th harmonic.

5. Transformer according to Claim 3, characterized in that there is no diode in each case between the first partial winding (W2) and the reference potential and between the last partial winding (W5) and the high-voltage terminal.

6. Transformer according to Claim 5, characterized in that the tuning to the harmonic desired in each case is achieved by the distance (b) of the base of the chamber from the core, by the distance (a) between the chambers (8) and/or by the extent to which the partial winding (W) fills the chambers (8).

## Revendications

1. Transformateur à haute tension pour un récepteur de télévision avec un bobinage à haute tension (W) ayant plusieurs fractions de bobinage (W2 à W5) séparées par des diodes (3 à 5) ; ces fractions de bobinage sont syntonisées sur un certain harmonique de la fréquence de l'oscillation de retour; le nombre de fractions de bobinage (W2 à W5) est supérieur au nombre de diodes (3 à 5) ; les fractions de bobinage séparées (W2 à W5) sont syntonisées sur différents harmoniques et les fractions de bobinage (W2 à W5) se trouvent dans les chambres (8) d'une armature de bobine à chambres (9), **caractérisé en ce que** l'écart (c) entre la première chambre (8a) et la deuxième chambre (8b) ainsi qu'entre l'avant dernière chambre (8c) et la dernière chambre (8d) de l'armature de la bobine (9), contenant un bobinage, est beaucoup plus petit que l'écart (a) ente les autre chambres.

2. Transformateur selon la revendication 1, **caractérisé en ce que**, la valeur du beaucoup plus petit écart (c) correspond à environ 30 à 50% de la valeur de l'écart (a) des autres chambres.

3. Transformateur selon la revendication 1, **caractérisé en ce que**, quatre fractions de bobinage (W2 à W5) sont syntonisées sur quatre harmoniques différents.

4. Transformateur selon la revendication 3, **caractérisé en ce que**, les fractions de bobinage (W2 à W5) sont syntonisées sur les 7è, 8,5è, 9,5è et 11è harmoniques.

5. Transformateur selon la revendication 3, **caractérisé en ce que**, entre la première fraction de bobinage (W2) et le potentiel de référence, ainsi qu'entre la dernière fraction de bobinage (W5) et la borne à haute tension, il n'y a pas de diode.

6. Transformateur selon la revendication 5, **caractérisé en ce que** la syntonisation sur les différents harmoniques souhaités est atteinte via l'écart (b) du fond de la chambre par rapport au centre, via l'écart (a) des chambres (8) les unes par rapport aux autres et/ou via la quantité de charge des chambres (8) avec les fractions de bobinage (W).
